# EUROPEAN PATENT APPLICATION

(11) **EP 4 060 999 A1**
(43) Date of publication of application: **21.09.2022**
(21) Application number: 21890360.7
(22) Date of filing: 15.07.2021
(51) Int. Cl.: H04N 21/431

(54) **VIDEO PLAYBACK METHOD AND VIDEO PLAYBACK APPARATUS**

(30) Priority: 31.12.2020 CN 202011639522
(71) Applicant: Beijing Dajia Internet Information Technology Co., Ltd., Haidian District Beijing 100085 (CN)
(72) Inventor: GU, Jiayi, Beijing 100085 (CN); LI, Xiaomeng, Beijing 100085 (CN)
(74) Representative: Zimmermann, Tankred Klaus
(86) International application number: PCT/CN2021/106505
(87) International publication number: WO 2022/142270

(57) **Abstract**

The disclosure relates to a method and an apparatus for playing a video, an electronic device and a computer readable storage medium. The method includes: playing a panoramic video in a first mode on a video playing interface, in which the first mode supports video switching based on a swiping gesture received on the video playing interface; acquiring a play mode switching instruction; and switching from playing the panoramic video in the first mode to playing the panoramic video in a second mode based on the play mode switching instruction, in which the second mode supports switching a viewpoint of the panoramic video based on the swiping gesture received on the video playing interface.

## Description

### CROSS-REFERENCE TO RELATED APPLICATION

The disclosure is based on and claims priority to Chinese Patent Application No. 202011639522.8 filed to China National Intellectual Property Administration on December 31, 2020, the disclosures of which are herein incorporated by reference in their entireties.

### TECHNICAL FIELD

The disclosure relates to a field of videos, and particularly to a method and an apparatus for playing a video, an electronic device, a computer readable storage medium and a computer program product.

### BACKGROUND

Panoramic video is a video captured in all directions by 3D cameras, and a user may adjust the panoramic video when watching the panoramic video through a device, for example, the user may switch a viewpoint of the panoramic video.

### SUMMARY

The disclosure provides a method and an apparatus for playing a video, an electronic device, a computer readable storage medium and a computer program product. The technical solution of the disclosure will be described as follows.

According to a first aspect of embodiments of the disclosure, a method for playing a video is provided and includes: playing a panoramic video in a first mode on a video playing interface, in which the first mode supports video switching based on a swiping gesture received on the video playing interface; acquiring a play mode switching instruction; and switching from playing the panoramic video in the first mode to playing the panoramic video in a second mode based on the play mode switching instruction, in which the second mode supports switching a viewpoint of the panoramic video based on the swiping gesture received on the video playing interface.

According to a second aspect of embodiments of the disclosure, an apparatus for playing a video is provided and includes: a playing module, configured to play a panoramic video in a first mode on a video playing interface, in which the first mode supports video switching based on a swiping gesture received on the video playing interface; an acquiring module, configured to acquire a play mode switching instruction; and a switching module, configured to switch from playing the panoramic video in the first mode to playing the panoramic video in a second mode based on the play mode switching instruction, in which the second mode supports switching a viewpoint of the panoramic video based on the swiping gesture received on the video playing interface.

According to a third aspect of embodiments of the disclosure, an electronic device is provided, and includes: a processor; a memory configured to store instructions executable by the processor; the processor is configured to execute the instructions to perform the method for playing a video according to embodiments of the disclosure.

According to a fourth aspect of embodiments of the disclosure, a computer readable storage medium is provided. When instructions in the computer readable storage medium are performed by a processor of an electronic device, the electronic device is caused to perform the method for playing a video according to embodiments of the disclosure.

According to a fifth aspect of embodiments of the disclosure, a computer program product is provided. When a computer program in the computer program product is executed by a processor of an electronic device, the electronic device is caused to perform the method for playing a video according to embodiments of the disclosure.

It should be understood that, the above general descriptions and latter detailed descriptions are only illustrative and descriptive, and may not be a limitation of the disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification, and does not constitute a limitation of the disclosure.
FIG. 1 is a block diagram illustrating a computer terminal configured to perform a method for playing a video according to an embodiment.
FIG. 2 is a flowchart illustrating a method for playing a video according to an embodiment.
FIG. 3 is a schematic diagram illustrating a method for playing a video according to an embodiment.
FIG. 4 is a block diagram illustrating an apparatus for playing a video according to an embodiment.
FIG. 5 is a block diagram illustrating a terminal according to an embodiment.
FIG. 6 is a block diagram illustrating a server according to an embodiment.

### DETAILED DESCRIPTION

The technical solutions in the disclosure are described clearly and completely below with reference to the accompanying drawings in the embodiments of the disclosure.

It should be noted that the terms "first", "second" and the like in the specification, the claims and the above attached drawings in the disclosure are used to distinguish similar objects, and are not necessarily used to describe a specific order or precedence order. It should be understood that the data used herein may be interchanged where appropriate, so that the embodiments of the disclosure described herein may be implemented in a sequence other than illustrated or described herein. The implementations described in the following exemplary embodiments do not represent all implementations consistent with the present disclosure. Rather, they are merely examples of apparatuses and methods consistent with some aspects of the present disclosure as detailed in the appended claims.

According to the embodiment of the disclosure, a method for playing a video is provided. It should be noted that steps illustrated in the flowcharts of the accompanying drawings may be executed in a computer system such as a set of computer executable instructions, and, although a logic sequence is shown in the flowcharts, in some cases, steps illustrated or described may be performed in a sequence other than the sequence herein.

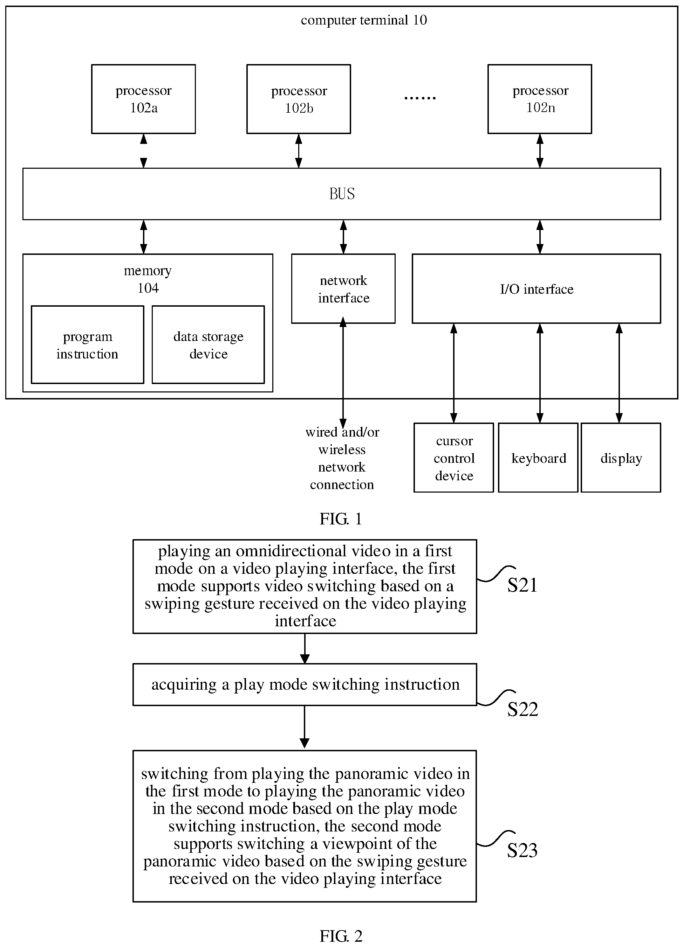

The method for playing a video provided in the embodiments of the present disclosure may be performed in a mobile terminal, a computer terminal, or a similar computing device. FIG. 1 is a block diagram illustrating a hardware structure of a computer terminal (or a mobile device) configured to perform the method for playing a video according to an embodiment. As illustrated in FIG. 1, the computer terminal 10 (or the mobile device) may include one or more (indicated by 102a, 102b, ..., 102n in FIG. 1) processors 102, which may include but is not limited to a processing apparatus such as a microprocessor MCU or a programmable logic device FPGA, a memory 104 for storing data, and a transmission apparatus with a communication function. In addition, the computer terminal 10 may further include a display, an input/output interface (I/O interface), a universal serial bus (USB) port (which may be included as one of ports of BUS), a network interface, a power supply, and/or a camera. It should be understood by those skilled in the art that the structure illustrated in FIG. 1 is merely an example, shall not be construed to limit the structure of the above electronic device. For example, the computer terminal 10 may include more or fewer components than those illustrated in FIG. 1, or have different configurations from that illustrated in FIG. 1.

It should be noted that the one or more processors 102 described above and/or other data processing circuits may generally be referred to herein as "data processing circuits". The data processing circuit may be embodied in whole or in part as a software, a hardware, a firmware, or any other combination thereof. Furthermore, the data processing circuit may be a single separate processing module, or combined in whole or in part, in any of other elements in the computer terminal 10 (or the mobile device). As referred to in embodiments of the disclosure, the data processing circuit serves as a processor to control, for example, selection of a variable resistance terminal path connected to an interface.

The memory 104 may be configured to store software programs and modules of application software, such as program instructions/data storage device corresponding to the method for playing a video according to the embodiments of the disclosure, and the processor 102 performs various functional applications and data processing by running software programs and modules stored in the memory 104, that is, perform the method for playing a video of the application program. The memory 104 may include a high-speed random access memory, and may also include a non-transitory memory, such as one or more magnetic storage devices, flash memories, or other non-transitory solid-state memories. In some examples, the memory 104 may further include a memory remotely disposed relative to the processor 102, which may be connected to the computer terminal 10 over a network. Examples of the network include, but are not limited to an Internet, an intranet, a local area network, a mobile communication network, and a combination thereof.

The transmission apparatus is configured to receive or transmit data via a network. Specific examples of the network may include a wireless network provided by a communication provider of the computer terminal 10. In an example, the transmission apparatus includes a Network Interface Controller (NIC) which may be connected to other network devices through a base station to communicate with the Internet. In an example, the transmission apparatus may be a radio frequency (RF) module for communicating with the Internet in a wireless manner.

The display may be, for example, a touch screen type liquid crystal display (LCD), which may enable a user to interact with a user interface of the computer terminal 10 (or the mobile device).

It should be noted that, in some embodiments, the computer device (or the mobile device) illustrated in FIG. 1 may include a hardware element (including a circuit), a software element (including a computer code stored on a computer readable medium), or a combination of the hardware element and the software element. It should be noted that, FIG. 1 is merely an example of a particular embodiment, and is intended to illustrate the type of the component which may exist in the above computer terminal (or the mobile device).

In the above operating environment, the disclosure provides a method for playing a video as illustrated in FIG. 2. FIG. 2 is a flowchart illustrating a method for playing a video according to an embodiment. As illustrated in FIG. 2, the method is applicable to the above computer terminal 10, and includes the following steps.

At block S21, a panoramic video is played in a first mode on a video playing interface. The first mode supports video switching based on a swiping gesture received on the video playing interface.

At block S22, a play mode switching instruction is acquired.

At block S23, it is switched from playing the panoramic video in the first mode to playing the panoramic video in a second mode based on the play mode switching instruction. The second mode supports switching a viewpoint of the panoramic video based on the swiping gesture received on the video playing interface.

Through the above processing, it is switched from playing the panoramic video in the first mode to playing the panoramic video in the second mode by acquiring the play mode switching instruction, so as to support switching the viewpoint of the panoramic video based on the swiping gesture received on the video playing interface. Not only a poor user experience caused by inconvenient operations for switching the viewpoint of the panoramic video in the related art is avoided, but also an effect of improving the user experience of browsing the panoramic video is achieved.

In one or more embodiments, in case of playing the panoramic video in the first mode on the video playing interface, since the first mode supports video switching based on a swiping gesture received on the video playing interface, the swiping gesture received in the first mode cannot support switching a viewpoint of the panoramic video due to function conflict, while other ways of switching the viewpoint may be supported, for example, the viewpoint may be switched by rotating the device. However, in case of switching the viewpoint by rotating the device, there is a certain limitation due to the limitation of the physical rotation position, thereby bringing a poor user experience. In response to acquiring a play mode switching instruction, it may be switched from playing the panoramic video in the first mode to playing the panoramic video in the second mode based on the play mode switching instruction. Since the second mode supports switching the viewpoint of the panoramic video based on the swiping gesture received on the video playing interface, and the way for switching the viewpoint based on the swiping gesture is not limited by the physical rotation position, the viewpoint may be randomly switched, to achieve a fully immersive panoramic video viewing experience, thereby improving the user experience.

In one or more embodiments, in case of playing the panoramic video in the first mode on the video playing interface, the panoramic video may be played in various ways, for example, the panoramic video may be played in a way of displaying on multiple layers. For example, a video element may be displayed on a first layer of the video playing interface, and the panoramic video may be played on a player layer of the video playing interface. The video element includes a functional icon and/or video information on the video playing interface. In general, the first layer is an upper layer above the player layer. Compared to displaying the panoramic video on one layer, when playing the panoramic video on multiple layers, only the layer where the object to be processed (which may be the video element mentioned above, or the video itself, etc.) is located needs to be processed without affecting objects on other layers, thus not only avoiding mutual interference between objects, but also facilitating the control and management of playing the panoramic video.

In one or more embodiments, the functional icon may include many different kinds of icons, for example, including at least one of the following: a progress bar, a navigation bar, a sidebar, a search box, and a video operation bar. In case of processing a task, The progress bar is configured to display a speed and a completion degree of processing the task, a size and possible processing time of the uncompleted part of the task in the form of a picture, which may be generally indicated by a rectangular strip. A position of the progress bar may be flexibly set as required, for example, may be disposed below the video playing interface. In an embodiment, the progress bar may indicate the completion degree of playing the panoramic video, i.e., indicating the amount of played content of the panoramic video and the amount of remaining content to be played, thereby facilitating the user to know a play progress and learn about a length of the entire panoramic video. The navigation bar includes a row of horizontal navigation buttons above or below the banner of the page header located at the top of the page or at the bottom of the page, which functions as linking sites or pages in a software application. For example, the navigation bar of the video playing interface may include: a sidebar button icon, a same city button icon, a discovery button icon, etc. The sidebar is a foldable responsive side navigation pane, for example, may be a navigation pane displayed on a side of the video playing interface, for example, a left side or a right side of the video playing interface. The sidebar may be displayed in response to a trigger of a predetermined sidebar button icon or a left and right swiping operation for the video playing interface, which is not limited herein. In addition, the sidebar may be integrated into the video playing interface, and in response to scrolling and refreshing the video playing interface, the sidebar may also be refreshed in a rolling manner. The search box is generally represented by a search button icon, a click on the search button icon may be received, and in response to the click on a display input box, an input of a search term is received. The video operation bar may include an operation button icon for the user to play the video, for example, a like button icon for giving the video a like, a forward button icon for forwarding the video, a comment button icon for commenting on the video, a favorite button icon for favoriting the video, a follow button icon for following the author of the video, etc.

In one or more embodiments, the video information may include video page information. The video page information may include a brief description of the video or information related to the video such as a video tag. The information related to the video may include information such as video author information, a brief description of video contents, a video type tag, a bullet screen message, etc. Usually, the above information is presented in the form of text, further a schematic icon may be inserted in the text to help the user understand the meaning of the text. In addition, the information related to the video may be presented in a static or dynamic form on the video playing interface, for example, the bullet screen message may be displayed circularly in a scrolling display manner in a bullet screen region of the video playing interface, and the brief description of video contents or the video type tag may be displayed in turn at a fixed time interval on the video playing interface. The content and form of the video page information presented on the video playing interface are not limited herein.

It should be noted that it is a common technical means to present an image and making a response to an interactive operation with a layer when playing a video on the video playing interface. The layer serves as a control function layer configured to display an image on the video playing interface, or serves as a functional control configured to make a response to an interactive operation of a user on the video playing interface. By using the layer flexibly, various functional effects may be achieved, thus satisfying requirements of the user. For example, a plurality of layers may be configured on the video playing interface, the plurality of layers display different images, and the functional controls provided on the plurality of layers are different. The best playing effect is achieved by means of the reasonable setting and flexible adjustment of the plurality of layers. In case that there are a plurality of layers on the video playing interface, the layers may be overlapped. Some layers are above other layers. Since one interactive operation usually corresponds to one feedback result, not all controls on the plurality of layers are configured to respond to the interactive operation, but the uppermost layer responds to the interactive operation. In addition, in case that the plurality of layers are overlapped on the video playing interface, the images displayed respectively on the plurality of layers may be presented on the video playing interface, and partially occluded between each other. For example, in case that the image presented on the upper layer includes a static icon and the image presented on the lower layer is a video, the icon on the upper layer may occlude a video image in the region where the icon is present, however, the user still may see the video image in a region of the video playing interface where there is no icon image on the upper layer, that is, the region where there is no icon or information on the upper layer may be set to be transparent.

In order to determine the overlapping relationship between the plurality of layers, a longitudinal axis position may be set for each of the plurality of layers, for example, a corresponding Z-axis coordinate may be set for each layer, to mark an overlapping state of the layer. In case that the user performs an interactive operation with the video playing interface, the response to the interactive operation may be made by the uppermost layer of layers in the overlapping state, and the lower layer of the layers in the overlapping state does not respond to the interactive operation. The uppermost layer is a layer with the largest Z-axis coordinate. Through the above setting, an effect that the uppermost layer "overlays" on other layers and responds to the interactive operation may be achieved.

Displaying an image on the video playing interface by a plurality of layers may employ a different way from the above way of responding to the interactive operation. As an implementation, the plurality of layers on the video playing interface may display different image contents respectively, for example, a player layer plays a video, a video element layer displays functional icons and video information related to the video, and an interaction layer responds to an interactive operation performed by the user on the video playing interface. All the three layers may be disposed on the video playing interface, and the image content in the upper layer may occlude the image content in the lower layer, and the region with no image content in the upper layer may be set to be transparent to the lower layer. For example, in case that the lowermost layer is the player layer, the image content in the middle layer occludes a part of the video content in the player layer, and the uppermost interactive layer is in a fully transparent state, so that the interactive layer may respond to an interactive operation on the video playing interface without interfering with the player layer to display the video content, further it is avoided to completely overlay the image content in the lower layer due to the upper and lower positions of the layers.

In one or more embodiments, the play mode switching instruction may adopt a single trigger on the video playing interface. In some embodiments, in response to the first layer including a second virtual button, the play mode switching instruction may further include a clicking on a region corresponding to the second virtual button on the video playing interface, and the second virtual button is configured to switch a mode of playing the panoramic video. It should be noted that, the play mode switching instruction may be implemented in at least one of the above ways. The second virtual button is a control on the layer, and the second virtual button includes a visible functional icon on the video playing interface for a user, and also includes a functional control on the layer that may make a response to the clicking on the second virtual button. For example, the play mode switching instruction may be configured as a single clicking at any position on the video playing interface, or a continuous double clicking at any position on the video playing interface. How to configure the play mode switching instruction may be determined based on an existing control instruction of the video playing interface, to avoid conflicts with the existing control instruction. In addition, the second virtual button may be configured as a distinctive panoramic functional icon, and in case of playing the panoramic video on the video playing interface, the icon is displayed at any position of the video playing interface, to prompt that the user may control the video playing interface to switch a video play mode by clicking on the icon.

In one or more embodiments, based on the play mode switching instruction, it is switched from playing the panoramic video in the first mode to playing the panoramic video in the second mode in the following way: based on the play mode switching instruction, creating a second layer above the first layer, in which the second layer is configured to receive a swiping gesture for switching the viewpoint of the panoramic video. Above the first layer may refer to above the layer in a longitudinal axis direction, the longitudinal axis direction may be configured to represent a response priority for an interactive operation on the video playing interface, and the upper layer may preferentially receive an interactive operation instruction and perform feedback. For example, in response to creating the second layer above the first layer, the second layer may overlay the first layer, and the swiping gesture on the video playing interface no longer triggers a control on the first layer, but only triggers a control on the second layer. In the above embodiment, a response result of the interactive operation on the video playing interface may be changed, for example, the response made by the first layer to the swiping gesture on the video playing interface is to switch the video, and in case of creating the second layer above the first layer, the response made by the second layer to the swiping gesture on the video playing interface is to switch a viewpoint of the video.

In one or more embodiments, by creating the second layer above the first layer, the interaction result between the user and the video playing interface may be changed to obtain a better video browsing experience. For example, in response to playing the video in the first mode, a swiping gesture is performed on the video playing interface to switch the video played on the interface, in this case, the control for switching the video based on the swiping gesture is located in the first layer. Since there is a certain difficulty in directly modifying the control in the layer, it is possible to add a new control in the first layer to switch the video playing interface to the second mode, that is, the control is an entry of switching the first mode to the second mode. By creating the second layer above the first layer, and setting the control on the second layer to switch the viewpoint of the panoramic video in response to the swiping gesture, an interaction effect after the user swipes the interface may be changed conveniently and quickly, so that the user may conveniently and freely manipulate the viewpoint of the panoramic video in the second mode. In addition, the second layer may be set in a transparent state, without affecting presentation of the image content of the layer below the second layer, so that the user cannot completely perceive a switching process of the mode, and the whole mode switching process is smooth.

In one or more embodiments, a video element on the first layer may also be hidden based on the play mode switching instruction. By hiding the video element on the first layer, the corresponding image content may be hidden in the image on the video playing interface, thereby reducing information irrelevant to the video content being played on the video playing interface, which provides a more pure video playing interface for the user to watch a video, and enables the user to obtain a more immersive video playing experience. For example, when the user switches to a panoramic video on the video playing interface by a software, the panoramic video, functional icons and video information of the video may be generally displayed on the video playing interface, so that the interface seems more complicated, which is not conducive to focusing on the panoramic video itself by the user. By hiding the video element on the first layer, that is, by hiding the functional icons and video information on the video playing interface, the panoramic video may be presented in most region of the whole video playing interface, so that the user may obtain a better immersive experience. In this case, in addition to the panoramic video being played on the video playing interface, only a very few functional icons such as an exiting icon may be included, and the displayed functional icons may be disposed on a layer other than the first layer, for example, disposed on the second layer above the first layer.

In one or more embodiments, the video element on the first layer may be hidden in the following way: in response to the first layer including an independent control function sublayer and a control image sublayer, deleting the control image sublayer; or in response to a control function part and a control image part being integrated into the first layer, deleting the first layer. It should be noted that there are a plurality of types of layers, for example, for different operating systems, the concepts or the configurations of the layer may be different. For example, for an Android system, the layer may include an independent control function sublayer and a control image sublayer; and for an IOS system, the control function part configured to make a response to the interactive operation and the control image part configured to display the image may be integrated on the same layer, and in this case, the two parts of the layer may not be independently created or deleted. For the Android system, in case that the layer includes the independent control function sublayer and the control image sublayer, since the second layer is created above the first layer, the interactive operation is responded by the second layer, and the functional control on the first layer is not triggered, so that the video element on the first layer may be hidden only by deleting the control image sublayer of the first layer. For the IOS system, in case that the control function part and the control image part are integrated into the first layer, since the two parts of the layer cannot be independently deleted, the technical effect of hiding the video element on the first layer may be achieved by deleting the first layer.

As an implementation, the video element on the first layer may be hidden in the following way: by changing a transparency of the video element displayed on the first layer, the effect of hiding the video element on the first layer may be achieved. All images on the first layer are adjusted transparent, so that a situation that the video played by the player layer is occluded by the image on the first layer may be avoided, thus achieving hiding the video element on the first layer. For example, in response to the layer including the independent control function sublayer and the control image sublayer, the functional icons and video information on the control image sublayer are set to be transparent, or the control image sublayer of the entire first layer is directly set to be transparent, so that the effect presented in front of the user is that the video element on the video playing interface is hidden and there is still a panoramic video being played on the interface. In response to the control function part and the control image part being integrated into the first layer, the control image part of the first layer may be controlled to set the image to be transparent to achieve the effect of hiding the video element.

In one or more embodiments, in response to playing the panoramic video in the second mode, the viewpoint of the panoramic video may be detected, and the viewpoint may be displayed through a virtual dashboard of the second layer. The virtual dashboard may be a control on the second layer, and by means of the virtual dashboard on the second layer, the user may rapidly determine a viewpoint position of the panoramic video being played. The virtual dashboard, as a control on the second layer, may be set at any position of the video playing interface, so that the user may determine a current viewpoint position of the panoramic video conveniently. In addition, the virtual dashboard may be further configured to restore an initial viewpoint that the user watches the video in response to a clicking on the virtual dashboard. In case of watching a panoramic video, the user may switch the viewpoint of the video to an inconvenient position due to unfamiliarity of switching the viewpoint or other reasons, and since the 3D direction of the panoramic viewpoint is not easy to grasp, the user cannot intuitively determine how to switch the viewpoint back to a suitable position. In this case, the virtual dashboard may be of great help for the user. For example, the user may manually switch the viewpoint to the viewpoint that the user desires based on a viewpoint orientation displayed on the virtual dashboard, or the user may reset the viewpoint of the panoramic video back to an initial viewpoint by clicking or dragging the virtual dashboard, so that the user may adjust the viewpoint of the panoramic video based on his own requirements. The virtual dashboard may have one or more of the above functions, which is not limited herein.

In one or more embodiments, in response to playing the panoramic video in the second mode, the video playing interface may include an exiting functional control for exiting the second mode. In response to receiving a trigger operation for the exiting control on the second layer, it is switched from playing the panoramic video in the second mode back to playing the panoramic video in the first mode. As an implementation, the icon and the control for exiting the second mode may be disposed on the second layer, so as to facilitate the user to select whether to continue playing the panoramic video in the second mode. The functional control for exiting the second mode may be configured in a variety of manners, for example, an exiting functional icon and an exiting functional control may be configured on the second layer. If the user performs a single click or multiple clicks on a corresponding position of the exiting functional icon, it is considered that a trigger operation on the exiting control is received. In some embodiments, the control icon for exiting the second mode may be represented by "X". The exiting operation may be configured as a single click or continuous multiple clicks on any position of the video playing interface, or may be configured as a predetermined gesture on the video playing interface.

In one or more embodiments, in response to playing the panoramic video in the second mode, the viewpoint of the panoramic video may be switched based on the swiping gesture received on the video playing interface. In some embodiments, based on the received swiping gesture, a direction and an amplitude of the swiping gesture are determined, and the viewpoint of the panoramic video is switched based on the direction and the amplitude of the swiping gesture. By supporting switching the viewpoint of the panoramic video based on the swiping gesture in the second mode, the function conflict of the swiping gesture when the panoramic video is played on the playing video interface is avoided. After the video playing interface enters the second mode, the user may swipe on the video playing interface with his hand, and in response to the gesture being swiping right, the viewpoint of the video played on the interface may be rotated right along with the gesture. Similarly, a rotation direction of the viewpoint of the video may be determined based on a swipe direction of the gesture. In addition, a rotation amplitude of the viewpoint may also be determined based on a swipe amplitude of the gesture, so that the user may flexibly control switching of the viewpoint of the video, which increases the convenience of the user to switch the viewpoint of the panoramic video.

In one or more embodiments, in response to playing the panoramic video in the first mode, a rotation of the terminal device may be detected, and the rotation may act as an interactive operation for switching the viewpoint of the panoramic video. In some embodiments, a direction and an amplitude of the rotation may be determined, and the viewpoint of the panoramic video may be switched based on the direction and the amplitude of the rotation. In case that the rotation of the terminal device can be detected, the embodiment of the disclosure may allow the user to perform a basic viewpoint control when the panoramic video is played in the first mode. In addition, the method may also be applied to a case of playing the panoramic video in the second mode. For example, in case that the user plays the panoramic video on the video playing interface, no matter whether the video is played in the first mode or the second mode, if the user has a requirement of switching the viewpoint of the panoramic video, by detecting the rotation of the terminal device and correspondingly rotating the viewpoint of the panoramic video based on the rotation, the user may change the viewpoint of the panoramic video without interacting with the video playing interface. It should be noted that, a response to the rotation of the terminal device does not depend on the longitudinal axis positions of the first layer and the second layer, that is, the response to the rotation of the terminal device may not be performed by the control on the layer. Therefore, as an implementation, after switching from playing the panoramic video in the first mode to playing the panoramic video in the second mode, the viewpoint of the panoramic video may still be switched based on the rotation of the terminal device.

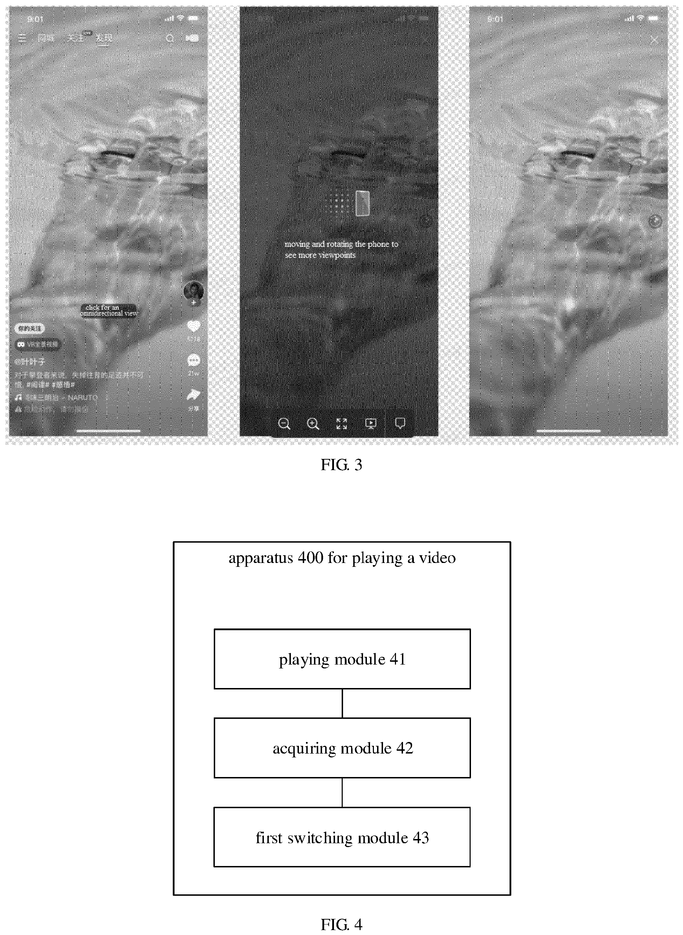

FIG. 3 is a schematic diagram illustrating a method for playing a video according to an embodiment. As illustrated in the left, middle and right figures of FIG. 3, the method includes the following steps.

In the left figure of FIG. 3, a virtual button on the video playing interface is clicked, and an icon of the virtual button displays "click for a panoramic view". By clicking on the virtual button, the video playing interface may be controlled to switch from playing the panoramic video in the first mode to playing the panoramic video in the second mode. The clicking on the virtual button may be preset as a predetermined interactive operation for switching a play mode.

In the middle figure of FIG. 3, the video element is hidden on the video playing interface, and an operation prompt of the second mode is displayed through the mask. The video element includes information and functional icons related to the panoramic video, such as a navigation bar, a sidebar, a search box, video detail information, a video like and forward functional icon, etc. The video element is hidden to make the video playing interface more pure, so that the user may obtain a more immersive panoramic video playing effect. The mask prompt may disappear by clicking or after a predetermined time period, and the text of "moving and rotating the phone to see more viewpoints" is displayed on the mask to prompt the user that the video playing interface currently enters a mode of playing the panoramic video, that is, a second play mode.

In the right figure of FIG. 3, the panoramic video is played in the second mode, and the video playing interface only retains the panoramic video, a viewpoint dashboard, and an exiting control. The viewpoint dashboard is configured to prompt the user the current viewpoint of the panoramic video, and the exiting control is configured to make the user actively control the video playing interface to exit the second mode of playing the panoramic video. In case of playing the panoramic video in the second mode, switching the viewpoint of the panoramic video based on the swiping gesture on the video playing interface may be supported, and switching the viewpoint of the panoramic video based on the movement and the rotation of the mobile phone may also be supported.

It should be noted that, for a simple description, all of the above method embodiments are expressed as a series of action combinations, however, those skilled in the art should appreciate that the disclosure is not limited by the action sequence described action, and certain blocks may be performed in other sequences or simultaneously based on the disclosure. Secondly, those skilled in the art should also know that the actions and modules referred to in the embodiments described in the specification are not necessarily required in the disclosure.

Through the description of the above implementation, those skilled in the art may clearly understand that the method based on the above embodiments may be achieved by means of a software plus a necessary universal hardware platform, and of course, may also be achieved by a hardware, however, in many cases, the former is a better implementation. On the basis of such an understanding, the part the technical solution of the disclosure essentially or making contribution to the related art may be embodied in the form of a software product, and the computer software product is stored in a storage medium (such as a ROM/RAM, a magnetic disc, an optical disc) including several instructions, so that a computer device (which may be a mobile phone, a computer, a server or a network device, etc.) may perform the method of each embodiment of the disclosure.

According to the embodiments of the disclosure, an apparatus for performing the above method for playing a video is further provided. FIG. 4 is a block diagram illustrating an apparatus for playing a video according to an embodiment. As illustrated in FIG. 4, the apparatus 400 for playing a video includes a playing module 41, an acquiring module 42 and a first switching module 43. The following is a description of the apparatus.

The playing module 41 is configured to play a panoramic video in a first mode on a video playing interface, in which the first mode supports video switching based on a swiping gesture received on the video playing interface. The acquiring module 42 is configured to acquire a play mode switching instruction. The first switching module 43 is configured to switch from playing the panoramic video in the first mode to playing the panoramic video in a second mode based on the play mode switching instruction, in which the second mode supports switching a viewpoint of the panoramic video based on the swiping gesture received on the video playing interface.

It should be noted that, the above playing module 41, the acquiring module 42 and the first switching module 43 correspond to blocks S21 to S23, and the examples and application scenes embodied in the above modules and the corresponding blocks are the same, but not limited to the contents disclosed in the embodiment 1. It needs to be noted that, the above module as a part of the apparatus may be run in a computer terminal 10.

In one or more embodiments, the playing module 41 includes a displaying unit and a playing unit. The displaying unit is configured to display a video element on a first layer of the video playing interface, in which the video element includes a functional icon and/or video information on the video playing interface. The playing unit is configured to play the panoramic video on a player layer of the video playing interface.

In one or more embodiments, the first switching module 43 includes a creating unit, and the creating unit is configured to create a second layer above the first layer based on the play mode switching instruction, in which the second layer is configured to receive the swiping gesture for switching the viewpoint of the panoramic video.

In one or more embodiments, the apparatus for playing a video further includes a hiding module, and the hiding module is configured to hide the video element on the first layer.

In one or more embodiments, the hiding module includes a deleting unit. The deleting unit is configured to, in response to the first layer including an independent control function sublayer and a control image sublayer, delete the control image sublayer; or in response to a control function part and a control image part being integrated into the first layer, delete the first layer.

In one or more embodiments, the apparatus for playing a video further includes a displaying module. The detecting module is configured to detect the viewpoint of the panoramic video, and display the viewpoint through a virtual dashboard of the second layer.

In one or more embodiments, the apparatus for playing a video further includes an exiting module, and the exiting module is configured to receive a trigger operation for an exiting control on the second layer, and switch from playing the panoramic video in the second mode back to playing the panoramic video in the first mode.

In one or more embodiments, the play mode switching instruction may include a single trigger on the video playing interface. In some embodiments, in response to the first layer including a second virtual button, a clicking on a region corresponding to the second virtual button on the video playing interface is acquired, in which the second virtual button is configured to switch a mode for playing the panoramic video.

In one or more embodiments, the apparatus for playing a video further includes a receiving module, a first determining module and a second switching module. The receiving module is configured to, in response to playing the panoramic video in the second mode, receive the swiping gesture on the video playing interface, in which the swiping gesture is configured to switch the viewpoint of the panoramic video. The first determining module is configured to determine a direction and an amplitude of the swiping gesture based on the received swiping gesture. The second switching module is configured to switch the viewpoint of the panoramic video based on the direction and the amplitude of the swiping gesture.

In one or more embodiments, the apparatus for playing a video further includes a detecting module, a second determining module and a third switching module. The detecting module is configured to detect a rotation of a terminal device in response to playing the panoramic video in the first mode, in which the rotation is configured to switch the viewpoint of the panoramic video. The second determining module is configured to determine a direction and an amplitude of the rotation. The third switching module is configured to switch the viewpoint of the panoramic video based on the direction and the amplitude of the rotation.

With regard to the apparatus in the embodiments, the specific way each module performs an operation has been described in detail in the embodiments of the method and will not be elaborated here.

The embodiment of the disclosure may provide a terminal, and the terminal may be any computer terminal device in a computer terminal group. In the embodiment of the disclosure, the above terminal may be a terminal device such as a mobile terminal.

In the embodiment of the disclosure, the above terminal may be at least one network device in a plurality of network devices located on a computer network.

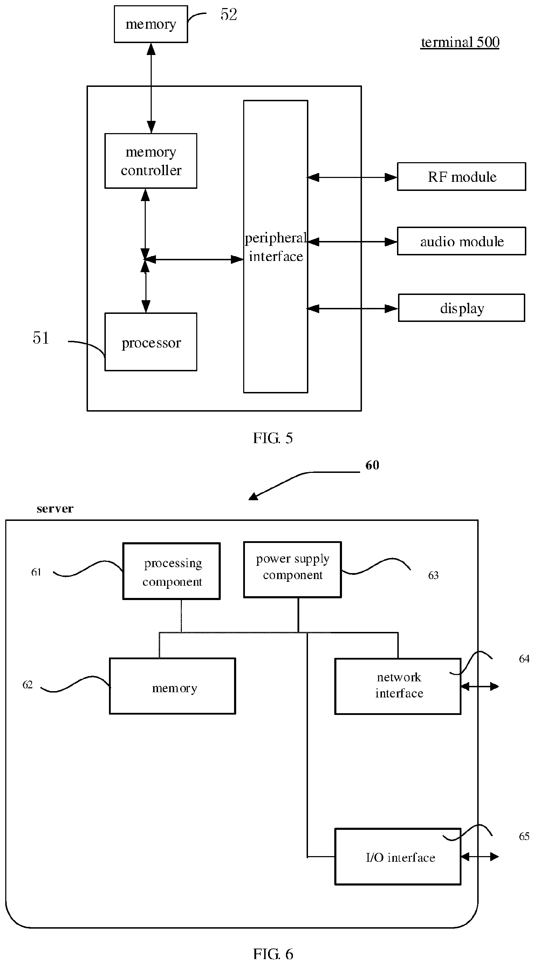

In some embodiments, FIG. 5 is a block diagram illustrating a terminal according to an embodiment. As illustrated in FIG. 5, the terminal 500 may include: one or more processors 51 (only one illustrated in FIG. 5); a memory 52 configured to store instructions executable by a processor. The processor is configured to perform the method for playing a video according to embodiments of the disclosure when performing the instructions.

The memory may be configured to store a software program and a module, such as a program instruction/module corresponding to a method and an apparatus for playing a video in the embodiments of the disclosure, and the processor performs various function applications and data processing by running a software program and a module stored in the memory, that is, performs the method for playing a video. The memory may include a high-speed random access memory, and may also include a non-transitory memory, such as one or more magnetic storage devices, flash memories, or other non-transitory solid-state memories. In some examples, the memory may further include a memory remotely disposed relative to the processor, which may be connected to a computer terminal over a network. Examples of the network include, but are not limited to an Internet, an intranet, a local area network, a mobile communication network, and combinations thereof.

The processor may call information or applications stored in the memory through a transmission apparatus to perform the following: playing a panoramic video in a first mode on a video playing interface, in which the first mode supports video switching based on a swiping gesture received on the video playing interface; acquiring a play mode switching instruction; and switching from playing the panoramic video in the first mode to playing the panoramic video in a second mode based on the play mode switching instruction, in which the second mode supports switching a viewpoint of the panoramic video based on the swiping gesture received on the video playing interface.

In some embodiments, the above processor may further execute program codes to perform the following: playing the panoramic video in the first mode on the video playing interface, including: displaying a video element on a first layer of the video playing interface, in which the video element includes a functional icon and/or video information on the video playing interface; and playing the panoramic video on a player layer of the video playing interface.

In some embodiments, the above processor may further execute program codes to perform the following: switching from playing the panoramic video in the first mode to playing the panoramic video in the second mode based on the play mode switching instruction, including: creating a second layer above the first layer based on the play mode switching instruction, in which the second layer is configured to receive the swiping gesture for switching the viewpoint of the panoramic video.

In some embodiments, the above processor may further execute program codes to perform the following: hiding the video element on the first layer.

In some embodiments, the above processor may further execute program codes to perform the following: hiding the video element on the first layer, including: in response to the first layer including an independent control function sublayer and a control image sublayer, deleting the control image sublayer; or in response to a control function part and a control image part being integrated into the first layer, deleting the first layer.

In some embodiments, the above processor may further execute program codes to perform the following: detecting the viewpoint of the panoramic video, and displaying the viewpoint through a virtual dashboard of the second layer.

In some embodiments, the above processor may further execute program codes to perform the following: receiving a trigger operation for an exiting control on the second layer, and switching from playing the panoramic video in the second mode back to playing the panoramic video in the first mode.

In some embodiments, the above processor may further execute program codes to perform the following: a single trigger on the video playing interface. In some embodiments, the above processor may further execute program codes to perform the following: in response to the first layer including a second virtual button, a clicking on a region corresponding to the second virtual button on the video playing interface, in which the second virtual button is configured to switch a mode of playing the panoramic video.

In some embodiments, the above processor may further execute program codes to perform the following: the functional icon may include at least one of a progress bar, a navigation bar, a sidebar, a search box, and a video operation bar; and the video information includes video page information.

In some embodiments, the above processor may further execute program codes to perform the following: in response to playing the panoramic video in the second mode, receiving the swiping gesture on the video playing interface, in which the swiping gesture is configured to switch the viewpoint of the panoramic video; determining a direction and an amplitude of the swiping gesture based on the swiping gesture; and switching the viewpoint of the panoramic video based on the direction and the amplitude of the swiping gesture.

In some embodiments, the above processor may further execute program codes to perform the following: detecting a rotation of a terminal device in response to playing the panoramic video in the first mode, in which the rotation is configured to switch the viewpoint of the panoramic video; determining a direction and an amplitude of the rotation; and switching the viewpoint of the panoramic video based on the direction and the amplitude of the rotation.

The embodiment of the disclosure may provide a server. FIG. 6 is a block diagram illustrating a server according to an embodiment. As illustrated in FIG. 6, the server 60 may include: one or more processing components 61 (only one illustrated in FIG. 6), a memory 62 configured to store instructions executable by the processing component 61, a power supply component 63 for providing a power supply, a network interface 64 configured to achieve communicating with an external network and an I/O interface 65 for performing data transmission. The processing component 61 is configured to perform the method for playing a video according to embodiments of the disclosure when performing the instruction.

The memory may be configured to store a software program and a module, such as a program instruction/module corresponding to a method and an apparatus for playing a video in the embodiments of the disclosure, and the processor performs various function applications and data processing by running a software program and a module stored in the memory, that is, performs the method for playing a video. The memory may include a high-speed random access memory, and may also include a non-transitory memory, such as one or more magnetic storage devices, flash memories, or other non-transitory solid-state memories. In some examples, the memory may further include a memory remotely disposed relative to a processor, which may be connected to a computer terminal over a network. Examples of the network include, but are not limited to an Internet, an intranet, a local area network, a mobile communication network, and combinations thereof.

The processing component may call information or applications stored in the memory through a transmission apparatus to perform the following: playing a panoramic video in a first mode on a video playing interface, in which the first mode supports video switching based on a swiping gesture received on the video playing interface; acquiring a play mode switching instruction; and switching from playing the panoramic video in the first mode to playing the panoramic video in a second mode based on the play mode switching instruction, in which the second mode supports switching a viewpoint of the panoramic video based on the swiping gesture received on the video playing interface.

In some embodiments, the above processing component may further execute program codes to perform the following: playing the panoramic video in the first mode on the video playing interface, including: displaying a video element on a first layer of the video playing interface, in which the video element includes a functional icon and/or video information on the video playing interface; and playing the panoramic video on a player layer of the video playing interface.

In some embodiments, the above processing component may further execute program codes to perform the following: switching from playing the panoramic video in the first mode to playing the panoramic video in the second mode based on the play mode switching instruction, including: creating a second layer above the first layer based on the play mode switching instruction, in which the second layer is configured to receive the swiping gesture for switching the viewpoint of the panoramic video.

In some embodiments, the above processing component may further execute program codes to perform the following: hiding the video element on the first layer.

In some embodiments, the above processing component may further execute program codes to perform the following: hiding the video element on the first layer, including: in response to the first layer including an independent control function sublayer and a control image sublayer, deleting the control image sublayer; or in response to a control function part and a control image part being integrated into the first layer, deleting the first layer.

In some embodiments, the above processing component may further execute program codes to perform the following: detecting the viewpoint of the panoramic video, and displaying the viewpoint through a virtual dashboard of the second layer.

In some embodiments, the above processing component may further execute program codes to perform the following: receiving a trigger operation for an exiting control on the second layer, and switching from playing the panoramic video in the second mode back to playing the panoramic video in the first mode.

In some embodiments, the above processing component may further execute program codes to perform the following: a single trigger on the video playing interface. In some embodiments, the above processing component may further execute program codes to perform the following: in response to the first layer including a second virtual button, a clicking on a region corresponding to the second virtual button on the video playing interface, in which the second virtual button is configured to switch a mode of playing the panoramic video.

In some embodiments, the above processing component may execute program codes to perform the following: the functional icon may include at least one of a progress bar, a navigation bar, a sidebar, a search box, and a video operation bar; and the video information includes video page information.

In some embodiments, the above processing component may execute program codes to perform the following: in response to playing the panoramic video in the second mode, receiving the swiping gesture on the video playing interface, in which the swiping gesture is configured to switch the viewpoint of the panoramic video; determining a direction and an amplitude of the swiping gesture based on the swiping gesture; and switching the viewpoint of the panoramic video based on the direction and the amplitude of the swiping gesture.

In some embodiments, the above processing component may execute program codes to perform the following: detecting a rotation of a terminal device in response to playing the panoramic video in the first mode, in which the rotation is configured to switch the viewpoint of the panoramic video; determining a direction and an amplitude of the rotation; and switching the viewpoint of the panoramic video based on the direction and the amplitude of the rotation.

Those skilled in the art may understand that the structures illustrated in FIG. 5 and FIG. 6 are merely schematic, for example, the terminal may also be a smart phone (such as an Android mobile phone, an IOS mobile phone, etc.), a tablet computer, a palm computer, a mobile internet device (MID), a PAD, etc. FIG. 5 and FIG. 6 do not limit the structure of the electronic device. For example, it may also include more or fewer components (for example, a network interface, a display apparatus, etc.) than those illustrated in FIG. 5 and FIG. 6, or have different configurations from those as illustrated in FIG. 5 and FIG. 6.

Those skilled in the art may understand that all or part of blocks in the methods of the above embodiments may be completed by instructing a hardware related to a terminal device by a program. The program may be stored in a computer readable storage medium, and the storage medium may be a flash disk, a read-only memory (ROM), a random access memory (RAM), a magnetic disk or an optical disk, etc.

In an exemplary embodiment, a computer readable storage medium including instructions is provided. When the instructions in the computer readable storage medium are performed by a processor of a terminal, the terminal is caused to perform the method for playing a video in embodiments of the disclosure. In some embodiments, a computer readable storage medium may be a non-transitory computer readable storage medium, for example, the non-transitory computer readable storage medium may be a ROM, a random access memory (RAM), a CD-ROM, a magnetic tape, a floppy disk, an optical data storage device, etc.

In the embodiment of the disclosure, the computer readable storage medium may be configured to store program codes performed by the method for playing a video according to the embodiment of the disclosure.

In the embodiment of the disclosure, the computer readable storage medium may be located in any computer terminal in a computer terminal group in a computer network, or located in any mobile terminal in the mobile terminal group.

In the embodiment of the disclosure, the computer readable storage medium may be configured to store program codes for performing the following: playing a panoramic video in a first mode on a video playing interface, in which the first mode supports video switching based on a swiping gesture received on the video playing interface; acquiring a play mode switching instruction; and switching from playing the panoramic video in the first mode to playing the panoramic video in a second mode based on the play mode switching instruction, in which the second mode supports switching a viewpoint of the panoramic video based on the swiping gesture received on the video playing interface.

In the embodiment of the disclosure, the computer readable storage medium may be configured to store program codes for performing the following: playing the panoramic video in the first mode on the video playing interface, including: displaying a video element on a first layer of the video playing interface, in which the video element includes a functional icon and/or video information on the video playing interface; and playing the panoramic video on a player layer of the video playing interface.

In the embodiment of the disclosure, the computer readable storage medium may be configured to store program codes for performing the following: switching from playing the panoramic video in the first mode to playing the panoramic video in the second mode based on the play mode switching instruction, including: creating a second layer above the first layer based on the play mode switching instruction, in which the second layer is configured to receive the swiping gesture for switching the viewpoint of the panoramic video.

In the embodiment of the disclosure, the computer readable storage medium may be configured to store program codes for performing the following: hiding the video element on the first layer.

In the embodiment of the disclosure, the computer readable storage medium may be configured to store program codes for performing the following: hiding the video element on the first layer, including: in response to the first layer including an independent control function sublayer and a control image sublayer, deleting the control image sublayer; or in response to a control function part and a control image part being integrated into the first layer, deleting the first layer.

In the embodiment of the disclosure, the computer readable storage medium may further be configured to store program codes for performing the following: detecting the viewpoint of the panoramic video, and displaying the viewpoint through a virtual dashboard of the second layer.

In the embodiment of the disclosure, the computer readable storage medium may be further configured to store program codes for performing the following: receiving a trigger operation for an exiting control on the second layer, and switching from playing the panoramic video in the second mode back to playing the panoramic video in the first mode.

In the embodiment of the disclosure, the computer readable storage medium may be further configured to store program codes for performing the following: a single trigger on the video playing interface. In the embodiment of the disclosure, the computer readable storage medium may be further configured to store program codes for performing the following: in response to the first layer including a second virtual button, a clicking on a region corresponding to the second virtual button on the video playing interface, in which the second virtual button is configured to switch a mode of playing the panoramic video.

In the embodiment of the disclosure, the computer readable storage medium may be configured to store program codes for performing the following: the functional icon may include at least one of a progress bar, a navigation bar, a sidebar, a search box, and a video operation bar; and the video information includes video page information.

In the embodiment of the disclosure, the computer readable storage medium may be configured to store program codes for performing the following: in response to playing the panoramic video in the second mode, receiving the swiping gesture on the video playing interface, in which the swiping gesture is configured to switch the viewpoint of the panoramic video; determining a direction and an amplitude of the swiping gesture based on the swiping gesture; and switching the viewpoint of the panoramic video based on the direction and the amplitude of the swiping gesture.

In the embodiment of the disclosure, the computer readable storage medium may be configured to store program codes for performing the following: detecting a rotation of a terminal device in response to playing the panoramic video in the first mode, in which the rotation is configured to switch the viewpoint of the panoramic video; determining a direction and an amplitude of the rotation; and switching the viewpoint of the panoramic video based on the direction and the amplitude of the rotation.

In an embodiment, a computer program product is further provided. When a computer program in the computer program product is performed by a processor of a terminal, the terminal is caused to perform the method for playing a video according to the embodiment of the disclosure.

The serial numbers of the embodiments of the disclosure are only for description, and do not represent advantages and disadvantages of the embodiments.

In the above embodiments of the disclosure, the descriptions of various embodiments are different, and the part not described in a certain embodiment may refer to related descriptions of other embodiments.

All embodiments of the disclosure may be performed separately or in combination with other embodiments, which are deemed within the protection scope pf the disclosure.

In several embodiments of the disclosure, it should be understood that the technical contents disclosed may be achieved in other manners. The apparatus embodiments described above are merely schematic, for example, the division of the units is merely a logical function division, and there may be another division method in actual implementation, for example, a plurality of units or components may be combined or integrated into another system, or some features may be ignored or not performed. In addition, the mutual coupling or direct coupling or communication connection displayed or discussed may be an indirect coupling or a communication connection of units and modules through some interfaces, and may be in electrical or other forms.

The units described as separate parts may or may not be physically separated, and parts displayed as units may or may not be physical units, that is, may be located in one place, or may be distributed on a plurality of network units. Some or all of units may be selected according to actual requirements to achieve the solutions in the embodiments.

In addition, functional units in the embodiments of the disclosure may be integrated in one processing unit, or each of the units may be physically existed alone, or two or more units may be integrated in one unit. The integrated unit may be achieved by a form of a hardware, and also may be achieved by a form of a software functional unit.

The integrated unit may be stored in a computer readable storage medium when it is achieved in the form of a software functional unit and sold and used as an independent product. Based on such an understanding, the technical solution of the disclosure essentially or the part contributing to the related art, or all or part of the technical solution may be embodied in the form of a software product, and the computer software product is stored in a storage medium including several instructions configured to cause a computer device (which may be a personal computer, a server or a network device, etc.) to perform all or part of blocks of various embodiments of the disclosure. The above storage medium includes a USB disk, a read-only memory (ROM), a random access memory (RAM), a mobile hard disk, a magnetic disk or an optical disk, and other media that may store program codes.

After considering the specification and practicing the disclosure herein, those skilled in the art will easily think of other embodiments of the present application. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The specification and embodiments are only be illustrative, and the true scope and spirit of the disclosure are indicated by the following claims.

It should be understood that the present disclosure is not limited to the precise structure described above and shown in the drawings, and various modifications and changes may be made without departing from its scope. The scope of the present application is only limited by the appended claims.

## Claims

1. A method for playing a video, comprising:
playing a panoramic video in a first mode on a video playing interface, wherein, the first mode supports video switching based on a swiping gesture received on the video playing interface;
acquiring a play mode switching instruction; and
switching from playing the panoramic video in the first mode to playing the panoramic video in a second mode based on the play mode switching instruction, wherein, the second mode supports switching a viewpoint of the panoramic video based on the swiping gesture received on the video playing interface.

2. The method of claim 1, wherein, playing the panoramic video in the first mode on the video playing interface, comprises:
displaying a video element on a first layer of the video playing interface, wherein, the video element comprises a functional icon and/or video information on the video playing interface; and
playing the panoramic video on a player layer of the video playing interface.

3. The method of claim 2, wherein, switching from playing the panoramic video in the first mode to playing the panoramic video in the second mode based on the play mode switching instruction, comprises:
creating a second layer above the first layer based on the play mode switching instruction, wherein, the second layer is configured to receive the swiping gesture for switching the viewpoint of the panoramic video.

4. The method of claim 3, further comprising:
hiding the video element on the first layer.

5. The method of claim 4, wherein, hiding the video element on the first layer, comprises:
deleting a control image sublayer in response to the first layer comprising a control function sublayer and the control image sublayer; or
deleting the first layer in response to a control function part and a control image part being integrated into the first layer.

6. The method of claim 3, further comprising:
detecting the viewpoint of the panoramic video, and displaying the viewpoint through a virtual dashboard of the second layer.

7. The method of claim 3, further comprising:
receiving a trigger operation for an exiting control on the second layer, and switching from playing the panoramic video in the second mode back to playing the panoramic video in the first mode.

8. The method of claim 2, wherein, the play mode switching instruction comprises:
a single trigger for the video playing interface.

9. The method of claim 2, wherein, the play mode switching instruction comprises:
a clicking on a region corresponding to a second virtual button on the video playing interface in response to the first layer comprising the second virtual button, wherein, the second virtual button is configured to switch a mode of playing the panoramic video.

10. The method of claim 1, further comprising:
receiving the swiping gesture on the video playing interface in response to playing the panoramic video in the second mode, wherein, the swiping gesture is configured to switch the viewpoint of the panoramic video;
determining a direction and an amplitude of the swiping gesture based on the swiping gesture; and
switching the viewpoint of the panoramic video based on the direction and the amplitude of the swiping gesture.

11. The method of claim 1, further comprising:
detecting a rotation of a terminal device in response to playing the panoramic video in the first mode, wherein, the rotation is configured to switch the viewpoint of the panoramic video;
determining a direction and an amplitude of the rotation; and
switching the viewpoint of the panoramic video based on the direction and the amplitude of the rotation.

12. An apparatus for playing a video, comprising:
a playing module, configured to play a panoramic video in a first mode on a video playing interface, wherein, the first mode supports video switching based on a swiping gesture received on the video playing interface;
an acquiring module, configured to acquire a play mode switching instruction; and
a first switching module, configured to switch from playing the panoramic video in the first mode to playing the panoramic video in a second mode based on the play mode switching instruction, wherein, the second mode supports switching a viewpoint of the panoramic video based on the swiping gesture received on the video playing interface.

13. The apparatus of claim 12, wherein, the playing module comprises:
a displaying unit, configured to display a video element on a first layer of the video playing interface, wherein, the video element comprises a functional icon and/or video information on the video playing interface; and
a playing unit, configured to play the panoramic video on a player layer of the video playing interface.

14. The apparatus of claim 13, wherein, the first switching module comprises:
a creating unit, configured to create a second layer above the first layer based on the play mode switching instruction, wherein, the second layer is configured to receive the swiping gesture for switching the viewpoint of the panoramic video.

15. The apparatus of claim 14, further comprising:
a hiding module, configured to hide the video element on the first layer.

16. The apparatus of claim 15, wherein, the hiding module comprises:
a deleting unit, configured to delete a control image sublayer in response to the first layer comprising a control function sublayer and the control image sublayer; or delete the first layer in response to a control function part and a control image part being integrated into the first layer.

17. The apparatus of claim 14, further comprising:
a displaying module, configured to detect the viewpoint of the panoramic video, and display the viewpoint through a virtual dashboard of the second layer.

18. The apparatus of claim 14, further comprising:
an exiting module, configured to receive a trigger operation for an exiting control on the second layer, and switch from playing the panoramic video in the second mode back to playing the panoramic video in the first mode.

19. The apparatus of claim 13, wherein, the play mode switching instruction comprises:
a single trigger for the video playing interface.

20. The apparatus of claim 13, wherein, the play mode switching instruction comprises:
a clicking on a region corresponding to a second virtual button on the video playing interface in response to the first layer comprising the second virtual button, wherein, the second virtual button is configured to switch a mode of playing the panoramic video.

21. The apparatus of claim 12, further comprising:
a receiving module, configured to receive a swiping gesture on the video playing interface in response to playing the panoramic video in the second mode, wherein, the swiping gesture is configured to switch the viewpoint of the panoramic video;
a first determining module, configured to determine a direction and an amplitude of the swiping gesture based on the swiping gesture; and
a second switching module, configured to switch the viewpoint of the panoramic video based on the direction and the amplitude of the swiping gesture.

22. The apparatus of claim 12, further comprising:
a detecting module, configured to detect a rotation of a terminal device in response to playing the panoramic video in the first mode, wherein, the rotation is configured to switch the viewpoint of the panoramic video;
a second determining module, configured to determine a direction and an amplitude of the rotation; and
a third switching module, configured to switch the viewpoint of the panoramic video based on the direction and the amplitude of the rotation.

23. An electronic device, comprising:
a processor; and
a memory configured to store instructions executable by the processor;
wherein, the processor is configured to execute the instructions to perform:
playing a panoramic video in a first mode on a video playing interface, wherein, the first mode supports video switching based on a swiping gesture received on the video playing interface;
acquiring a play mode switching instruction; and
switching from playing the panoramic video in the first mode to playing the panoramic video in a second mode based on the play mode switching instruction, wherein, the second mode supports switching a viewpoint of the panoramic video based on the swiping gesture received on the video playing interface.

24. A computer readable storage medium, wherein, when instructions in the computer readable storage medium are performed by a processor of an electronic device, the electronic device is caused to perform:
playing a panoramic video in a first mode on a video playing interface, wherein, the first mode supports video switching based on a swiping gesture received on the video playing interface;
acquiring a play mode switching instruction; and
switching from playing the panoramic video in the first mode to playing the panoramic video in a second mode based on the play mode switching instruction, wherein, the second mode supports switching a viewpoint of the panoramic video based on the swiping gesture received on the video playing interface.

25. A computer program product, comprising a computer program, wherein, the computer program, when executed by a processor, is configured to perform:
playing a panoramic video in a first mode on a video playing interface, wherein, the first mode supports video switching based on a swiping gesture received on the video playing interface;
acquiring a play mode switching instruction; and
switching from playing the panoramic video in the first mode to playing the panoramic video in a second mode based on the play mode switching instruction, wherein, the second mode supports switching a viewpoint of the panoramic video based on the swiping gesture received on the video playing interface.
